# EUROPÄISCHE PATENTSCHRIFT

(11) **EP 2 463 704 B1**
(45) Veröffentlichungstag und Bekanntmachung des Hinweises auf die Patenterteilung: **04.09.2013**
(21) Anmeldenummer: 11193088.9
(22) Anmeldetag: 12.12.2011
(51) Int. Cl.: G02B 21/26

(54) **Mikroskoptisch**
Microscope table
Table de microscope

(30) Priorität: 10.12.2010 DE 102010061167
(43) Veröffentlichungstag der Anmeldung: 13.06.2012
(73) Patentinhaber: Leica Microsystems CMS GmbH, 35578 Wetzlar (DE)
(72) Erfinder: Seifert, Roland, 69115 Heidelberg (DE); Fölling, Jonas, 69115 Heidelberg (DE)
(74) Vertreter: Schaumburg, Thoenes, Thurn, Landskron, Eckert

(56) Entgegenhaltungen:
- DE-T2- 69 530 095
- US-A- 4 676 492
- US-A- 5 744 924
- US-B1- 6 369 940

## Beschreibung

Die Erfindung betrifft einen Mikroskoptisch nach dem Oberbegriff des Anspruchs 1.

In jüngerer Vergangenheit wurden lichtmikroskopische Verfahren entwickelt, mit denen sich basierend auf einer sequentiellen, stochastischen Lokalisierung von einzelnen Punktobjekten, insbesondere Fluoreszenzmolekülen, Bildstrukturen darstellen lassen, die kleiner sind als die beugungsbedingte Auflösungsgrenze klassischer Lichtmikroskope. Solche Verfahren sind beispielsweise beschrieben in WO 2006/127692 A2; DE 10 2006 021 317 B3; WO 2007/128434 A1, US 2009/0134342 A1; DE 10 2008 024 568 A1; "Subdiffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet. Die angewandten Verfahren sind in der Literatur z.B. unter den Bezeichnungen (F)PALM ((Fluorescence) Photoactivation Localization Microscopy), PALMIRA (PALM with Independently Running Acquisition), GSD(IM) (Ground State Depletion (Individual Molecule return) Microscopy) oder (F)STORM ((Fluorescence) Stochastic Optical Reconstruction Microscopy) bekannt.

Den neuen Verfahren ist gemein, dass die abzubildenden Strukturen mit Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand. Zur Abbildung von Bildstrukturen mit einer Auflösung, die kleiner als die klassische Auflösungsgrenze des abbildenden optischen Systems ist, wird nun wiederholt eine kleine Untermenge der Marker in den hellen Zustand präpariert und damit gleichsam aktiviert. Diese aktivierte Untermenge ist dabei so zu wählen, dass der mittlere Abstand benachbarter Marker im hellen Zustand größer ist als die Auflösungsgrenze des abbildenden optischen Systems. Die Luminanzsignale der aktivierten Untermenge werden auf einen räumlich auflösenden Lichtdetektor, z.B. eine CCD-Kamera, abgebildet. Von jedem Marker wird so ein Lichtfleck erfasst, dessen Größe durch die Auflösungsgrenze des abbildenden optischen Systems bestimmt ist.

Auf diese Weise wird eine Vielzahl von Rohdaten-Einzelbildern aufgenommen, in denen jeweils eine andere aktivierte Untermenge abgebildet ist. In einem Bildanalyse-Prozess werden dann in jedem Rohdaten-Einzelbild die Schwerpunkte der Lichtflecke bestimmt, die die im hellen Zustand befindlichen Marker darstellen. Die aus den Rohdaten-Einzelbildern ermittelten Schwerpunkte der Lichtflecke werden dann in einer Gesamtdarstellung zusammengetragen. Das durch diese Gesamtdarstellung entstehende hochaufgelöste Bild spiegelt die Verteilung der Marker wieder. Für eine repräsentative Wiedergabe der abzubildenden Struktur müssen ausreichend viele Signale detektiert werden. Da jedoch die Anzahl an Markern in der jeweils aktivierten Untermenge durch den minimalen mittleren Abstand, den zwei Marker im hellen Zustand voneinander haben dürfen, limitiert ist, müssen sehr viele Rohdaten-Einzelbilder aufgenommen werden, um die Struktur vollständig abzubilden. Typischerweise liegt die Anzahl an Rohdaten-Einzelbildern in einem Bereich von 10.000 bis 100.000.

Die für die Aufnahme eines Rohdaten-Einzelbildes benötigte Zeit ist nach unten hin durch die maximale Bildaufnahmerate des abbildenden Detektors limitiert. Dies führt zu vergleichsweise langen Gesamtaufnahmezeiten für eine für die Gesamtdarstellung benötigte Serie von Rohdaten-Einzelbildern. So kann die Gesamtaufnahmezeit bis zu einigen Stunden betragen.

Über diese lange Gesamtaufnahmezeit kann es nun zu einer Bewegung der abzubildenden Probe relativ zum bildgebenden optischen System kommen. Da für die Erstellung eines hochaufgelösten Gesamtbildes alle Rohdaten-Einzelbilder nach der Schwerpunktbestimmung zusammengeführt werden, verschlechtert jede Relativbewegung zwischen Probe und bildgebendem optischen System, die während der Aufnahme zweier aufeinanderfolgender Rohdaten-Einzelbilder auftritt, die Ortsauflösung des Gesamtbildes. In vielen Fällen rührt diese Relativbewegung von einer systematischen mechanischen Bewegung des Systems her, auch als mechanische Drift bezeichnet, die beispielsweise durch thermische Ausdehnung oder Schrumpfung, durch mechanische Verspannungen oder durch die Veränderung der Konsistenz von Schmiermitteln, die in den mechanischen Komponenten verwendet werden, verursacht wird.

In den vorstehend beschriebenen hochauflösenden Verfahren ist es von besonderer Bedeutung, für eine driftfreie Probenpositionierung auf einem Mikroskoptisch zu sorgen. Im Stand der Technik werden hierzu häufig sogenannte Kreuztische eingesetzt, die es ermöglichen, einen Probenträger auf einer Tischplatte in zwei zueinander senkrechte Richtungen (im Folgenden auch als X- und Y-Richtung bezeichnet) in einer zur Tischplatte parallelen Verstellebene (X-Y-Ebene) zu bewegen. Ein solcher Kreuztisch besteht aus zwei einander überlagerten, mechanisch miteinander gekoppelten Platten sowie einem Antrieb, der die beiden Platten gegeneinander bewegt. Die Bewegungen des Probenträgers in Richtung der X-Achse und der Y-Achse sind also bei einem Kreuztisch miteinander gekoppelt.

Mit einem solchen Mikroskoptisch ist es grundsätzlich möglich, den Probenträger einfach und präzise auf dem Mikroskoptisch zu positionieren. Jedoch wirkt sich wegen der mechanischen Kopplung der den Kreuztisch bildenden Komponenten eine mechanische Drift, die infolge thermischer Einflüsse oder in dem Antrieb vorhandener mechanischer Spannungen in einer dieser Komponenten auftritt, auch auf die jeweils anderen Komponenten aus. Dies kann in hochauflösenden lichtmikroskopischen Verfahren, in denen lange Gesamtaufnahmezeiten vorgesehen sind und Auflösungen im Nanometerbereich angestrebt werden, zu nicht tolerierbaren Bildverschiebungen führen.

Aus der DE 695 30 095 T2 ist eine planare Positionierbühne bekannt, die eine Plattform aufweist, auf der ein zu positionierendes Werkstück angeordnet wird. Die Positionierbühne umfasst ferner eine erste und eine zweite Verstellvorrichtung, die ausgebildet sind, das Werkstück in einer Verstellebene längs einer ersten bzw. längs einer quer zur ersten Achse liegenden zweiten Achse zu bewegen.

In der DE 35 14 431 A1 ist ein Mikroskoptischantrieb beschrieben, der zwei senkrecht zueinander bewegbare Schlitten sowie koaxial gelagerte Antriebsglieder zum Bewegen der Schlitten umfasst. Die Kraftübertragung zwischen den Antriebsgliedern und den Schlitten erfolgt durch Zugmittel, die über Umlenkrollen laufen.

Aus der DE 19 38 771 A ist ein Präzisionsantrieb für zwei rechtwinklig zueinander geführte und verfahrbare Schlitten bekannt, von denen ein erster Schlitten in einer ortsfesten Führung und ein zweiter Schlitten in einer auf dem ersten Schlitten vorgesehenen Führung gelagert ist.

Zum Stand der Technik wird ferner auf JP 2005 091 866 A, US 5 000 554 A, JP 58-106 514 A und US 2006/0 138 871 A1 verwiesen, aus denen Positioniereinrichtungen bekannt sind, mit denen sich ein Objekt in einer Verstellebene längs zweier senkrecht zueinander verlaufender Achsen bewegen lässt.

Aus der US 5 744 924 A ist ein Tisch zum Positionieren eines Wafers in einer Lithografieanlage bekannt. Dieser Tisch umfasst eine Tischplatte, einen auf der Tischplatte aufliegenden Probenträger und eine Positioniereinrichtung zum Bewegen des Probenträgers in einer zur Tischplatte parallelen Verstellebene. Die Positioniereinrichtung ist aus zwei mechanisch voneinander entkoppelten Schiebern gebildet, mit denen sich der Probenträger in zwei senkrecht zueinander liegenden Richtungen verschieben lässt.

Aufgabe der Erfindung ist es, einen in der hochauflösenden Lichtmikroskopie verwendbaren Mikroskoptisch anzugeben, der eine präzise und driftfreie Positionierung eines Probenträgers auf dem Mikroskoptisch relativ zum bildgebenden optischen System ermöglicht.

Die Erfindung sieht demnach eine vollständige Entkopplung der Bewegungen des Probenträgers längs der ersten Achse und der zweiten Achse vor. Dadurch werden gegenseitige Driftbeeinflussungen der beiden die Positioniereinrichtung bildenden Verstellvorrichtungen zuverlässig vermieden. Es ist mithin ausgeschlossen, dass sich eine mechanische Drift, die in einer der beiden Verstellvorrichtungen auftritt, auf die andere Verstellvorrichtung überträgt und so eine Fehlpositionierung des Probenträgers verursacht.

Der Probenträger liegt mit einer Haftkraft auf der Tischplatte auf, die größer ist als eine Kraft, mit der die Positioniereinrichtung in ihrem deaktivierten Betriebszustand auf den Probenträger einwirkt. Unter "deaktiviertem" Betriebszustand ist dabei ein Zustand gemeint, in dem die Positionierung des Probenträgers auf der Tischplatte abgeschlossen und die Positioniereinrichtung gleichsam funktionslos ist. Die hinreichend große Haftkraft, mit der der Probenträger auf der Tischplatte aufliegt, kann durch ein entsprechend hohes Gewicht des Probenträgers erzielt werden. Dieses ist so zu wählen, dass es zum einen noch eine präzise Verschiebung des Probenträgers auf der Tischplatte mittels der Positioniereinrichtung erlaubt und zum anderen sicherstellt, dass der in seine Zielposition bewegte Probenträger so fest auf der Tischplatte aufliegt, dass eine unbeabsichtigte driftbedingte Einwirkung der Positioniereinrichtung zu keiner Verschiebung des Probenträgers auf der Tischplatte führt.

Eine hinreichend große Haftkraft kann auch durch andere Materialeigenschaften erzielt oder zumindest unterstützt werden. Beispielsweise ist denkbar, für eine magnetische Wechselwirkung zwischen Probenträger und Tischplatte zu sorgen, welche die Haftkraft so stark werden lässt, dass eine Verschiebung des Probenträgers durch die deaktivierte Positioniereinrichtung ausgeschlossen ist. Beispielsweise ist es auch denkbar, eine Änderung der Oberfläche des Probenträgers und/oder der Positioniereinrichtung vorzunehmen, um eine Erhöung der Haftkraft zu erreichen, so dass eine Verschiebung des Probenträgers durch die deaktivierte Positioniereinrichtung ausgeschlossen werden kann.

Die Ausgestaltung des Mikroskoptisches sieht vor, dass die erste Verstellvorrichtung einen ersten Schieber, der zum Verschieben des Probenträgers mit diesem in Anlage bringbar ist, eine erste Linearführung, in der der erste Schieber längs der ersten Achse geführt ist, und einen ersten Antrieb zum Bewegen des ersten Schiebers längs der ersten Achse umfasst, und dass die zweite Verstellvorrichtung einen zweiten Schieber, der zum Verschieben des Probenträgers mit diesem in Anlage bringbar ist, eine zweite Linearführung, in der der zweite Schieber längs der zweiten Achse geführt ist, und einen zweiten Antrieb zum Bewegen des zweiten Schiebers längs der zweiten Achse umfasst. In dieser Ausgestaltung wird die mechanische Entkopplung der beiden Verstellvorrichtungen durch das Vorsehen separater Schieber, Linearführungen und Antriebe realisiert, die dafür sorgen, dass der Probenträger in unabhängigen Bewegungen längs der ersten und der zweiten Achse verstellt werden kann. Dabei ist die Haftkraft, mit der der Probenträger auf der Tischplatte aufliegt, größer als die Summe derjenigen Kräfte, mit denen die Antriebe über die ihnen zugeordneten Schieber im deaktivierten Betriebszustand der Positioniereinrichtung auf den Probenträger einwirken. Hierzu sind die Antriebe vorzugsweise so leichtgängig gestaltet, dass sich die mit den Antrieben gekoppelten Schieber gleichsam an dem Probenträger abstoßen, wenn sie infolge mechanischer Drift auf den Probenträger gedrückt werden. Insbesondere ist sichergestellt, dass der Probenträger keine kraft- oder formschlüssige Verbindung zu den Antrieben aufweist.

Der erste Schieber ist im Wesentlichen U-förmig ausgebildet und weist einen längs zur ersten Achse angeordne-ten ersten Basisabschnitt sowie zwei quer zur ersten Achse angeordnete erste Schenkelabschnitte auf. Entsprechend ist der zweite Schieber im Wesentlichen U-förmig ausgebildet und weist einen längs zur zweiten Achse angeordneten zweiten Basisabschnitt sowie zwei quer zur zweiten Achse angeordnete zweite Schenkelabschnitte auf. Ferner ist der Probenträger im Wesentlichen als rechteckige Platte ausgebildet, die zwei erste einander gegenüberliegende Seiten, die mit Spiel von den ersten Schenkelabschnitten der ersten Platte flankiert sind, und zwei zweite einander gegenüberliegende Seiten hat, die mit Spiel von den zweiten Schenkelabschnitten der zweiten Platte flankiert sind. In dieser Ausgestaltung ist der Probenträger jeweils zwischen den beiden Schenkelabschnitten der beiden U-förmigen Schieber angeordnet. Um die Kraft, mit der die Positioniereinrichtung in ihrem deaktivierten Betriebszustand auf den Probenträger einwirkt, zu minimieren, ist der Abstand, den die beiden Schenkelabschnitte des jeweiligen Schiebers voneinander haben, so groß, dass der Probenträger nicht zwischen den beiden Schenkelabschnitten eingeklemmt ist. Dadurch ist sichergestellt, dass im deaktivierten Betriebszustand der Positioniereinrichtung höchstens einer der beiden Schenkelabschnitte an dem Probenträger anliegt und gleichsam an diesem abgestoßen wird, wenn er infolge einer mechanischen Drift gegen den Probenträger gedrückt wird.

Vorzugsweise sind die beiden Schieber kreuzweise und berührungslos zueinander angeordnet. Hierzu kann einer der beiden zweiten Schenkelabschnitte des zweiten Schiebers eine längliche Aussparung aufweisen, die sich parallel zur ersten Achse erstreckt, während einer der beiden ersten Schenkelabschnitte des ersten Schiebers die Aussparung parallel zur zweiten Achse durchsetzt. Die Länge der Aussparung ist dabei unter Berücksichtigung der Verstellstrecken der beiden Schieber so zu bemessen, dass die Schieber über ihren gesamten Bewegungsbereich berührungslos zueinander angeordnet und damit voneinander entkoppelt sind.

Vorzugsweise umfassen die beiden Antriebe jeweils ein um Rollen umlaufend angetriebenes Seil und ein an dem Seil angebrachtes Kopplungselement, durch welches das jeweilige Seil fest mit dem zugehörigen Schieber gekoppelt ist. Diese Ausgestaltung dient dazu, die Antriebe besonders leichtgängig zu gestalten. Dadurch ist sichergestellt, dass sich die Kräfte, die in dem jeweiligen Antrieb beispielsweise durch thermische Verformung entstehen, innerhalb des Antriebs entspannen, ohne den mit vergleichsweise hoher Haftkraft auf der Tischplatte ruhenden Probenträger bei deaktivierter Positioniereinrichtung zu verschieben.

Vorzugsweise ist das Kopplungselement ein Seilspanner, in dem die beiden Enden des Seils eingespannt sind. Dadurch kann die Seilspannung, welche die Leichtgängigkeit des jeweiligen Seilantriebs beeinflusst, in einfacher Weise optimiert werden.

In einer weiteren Ausgestaltung umfassen die beiden Antriebe jeweils ein handbetätigtes Antriebsrad und ein mit dem Antriebsrad und dem Seil gekoppeltes Untersetzungsgetriebe, das eine Drehbewegung des jeweiligen Antriebsrads in die umlaufende Antriebsbewegung des zugehörigen Seils umsetzt. Diese Ausgestaltung ermöglicht es dem Benutzer, den Probenträger in einfacher Weise auf der Tischplatte zu positionieren. Das Untersetzungsgetriebe begünstigt die Präzision, mit der diese Positionierung vorgenommen werden kann.

In einer vorteilhaften Weiterbildung umfassen die beiden Linearführungen jeweils eine längs der zugehörigen Achse angeordnete Führungsschiene und mindestens ein mit dem zugehörigen Schieber gekoppeltes Linearlager, das auf der jeweiligen Führungsschiene verschiebbar ist. Als Linearlager sind beispielsweise Linearkugellager oder Lineargleitlager verwendbar, die besonders leichtgängig ausgeführt werden können.

Vorzugsweise wird eine hinreichend große Haftkraft, mit der der Probenträger auf der Tischplatte aufliegt, durch ein entsprechend hohes Gewicht des Probenträgers erreicht. Beispielsweise kann der Probenträger aus Messing bestehen, während die beiden Schieber aus Aluminium bestehen. Durch diese Materialwahl ist sichergestellt, dass der Probenträger im Verhältnis zu den beiden Schiebern ein vergleichsweise hohes Gewicht und damit eine vergleichsweise hohe Haftkraft auf der Tischplatte aufweist.

In einer besonders bevorzugten Ausgestaltung ist an der Tischplatte ein Objektiv angebracht. Gegenüber herkömmlichen Ausgestaltungen, bei denen das Objektiv von der Tischplatte entkoppelt ist, hat diese Weiterbildung den Vorteil, dass nicht nur der Probenträger, sondern auch das Objektiv eine feste Anordnung gegenüber der Tischplatte aufweist, wodurch die mechanische Drift zwischen dem Probenträger und dem Objektiv minimiert ist.

Die mechanische Drift kann weiter verringert werden, wenn das Objektiv über einen Fokussierantrieb an der Tischplatte angebracht ist. Durch die Anbringung des Fokussierantriebs an der Tischplatte in fester räumlicher Zuordnung zu dem auf der Tischplatte liegenden Probenträger ist auch die in jedem Fall erforderliche Fokussierung des Objektivs nicht driftanfällig.

Nach einem weiteren Aspekt der Erfindung ist ein Mikroskop mit einem Mikroskoptisch vorstehend erläuterter Art vorgesehen.

Vorzugsweise weist ein solches Mikroskop einen Objektivrevolver zum wahlweisen Einschwenken eines von mehreren an dem Objektivrevolver gehaltenen Mikroskopobjektiven auf. Ist zusätzlich zu diesem Objektivrevolver ein an der Tischplatte angebrachtes Objektiv vorgesehen, so kann ein solches Mikroskop besonders flexibel genutzt werden. Beispielsweise ist es möglich, mittels eines der an dem Objektivrevolver gehaltenen Mikroskopobjektive zunächst übersichtshalber einen vergleichsweise großen Bildausschnitt zu betrachten und darin einen geeigneten Zielbereich auszuwählen, der dann mittels des weitgehend driftfrei an der Tischplatte gehaltenen Objektivs mit besonders hoher Auflösung abgebildet wird. In diesem Fall ist das an der Tischplatte gehaltene Objektiv so anzubringen, dass es über eine geeignete Schwenkvorrichtung aus dem Abbildungsstrahlengang entfernt und bei Bedarf wieder in diesen eingeschwenkt und dann lagestabil an der Tischplatte fixiert werden kann. Die Erfindung wird im Folgenden anhand eines Ausführungsbeispiels unter Bezugnahme auf die Figuren näher erläutert.

Darin zeigen:
- Figur 1: eine perspektivische Ansicht eines hochauflösenden Lichtmikroskops als Ausführungsbeispiel;
- Figur 2: eine perspektivische Unteransicht des Mikroskoptisches des Lichtmikroskops nach Figur 1;
- Figur 3: eine perspektivische Draufsicht auf den Mikroskoptisch;
- Figur 4: eine perspektivische, teilweise geschnittene Draufsicht auf den Mikroskoptisch unter Hervorhebung eines X-Antriebs und eines Y-Antriebs;
- Figur 5: eine teilweise aufgebrochene Draufsicht auf den Mikroskoptisch unter Hervorhebung des X-Antriebs und des Y-Antriebs;
- Figur 6: eine Draufsicht auf den Mikroskoptisch, in der ein X-Schieber und ein Y-Schieber lediglich schematisch dargestellt sind.

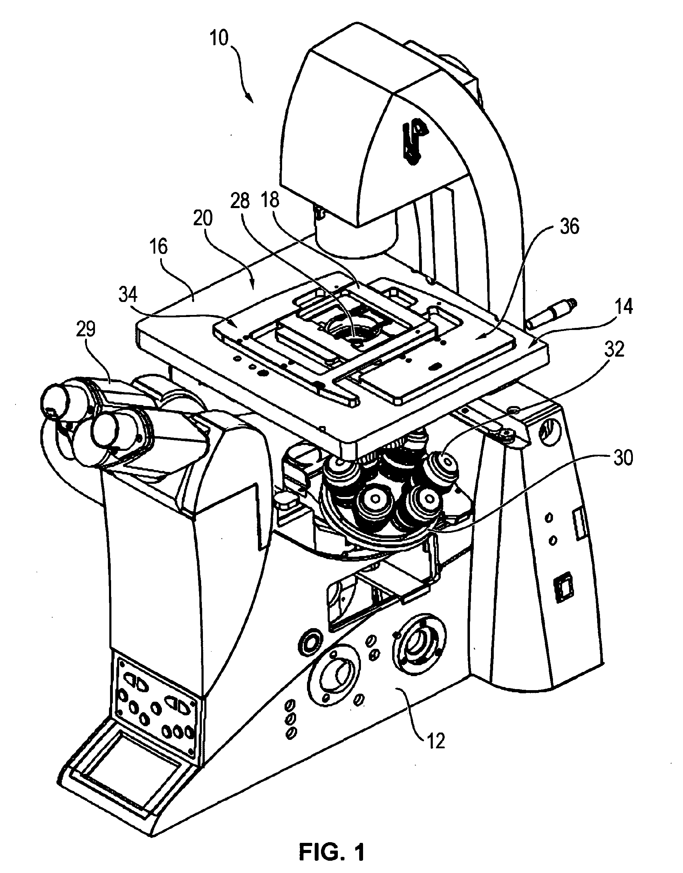

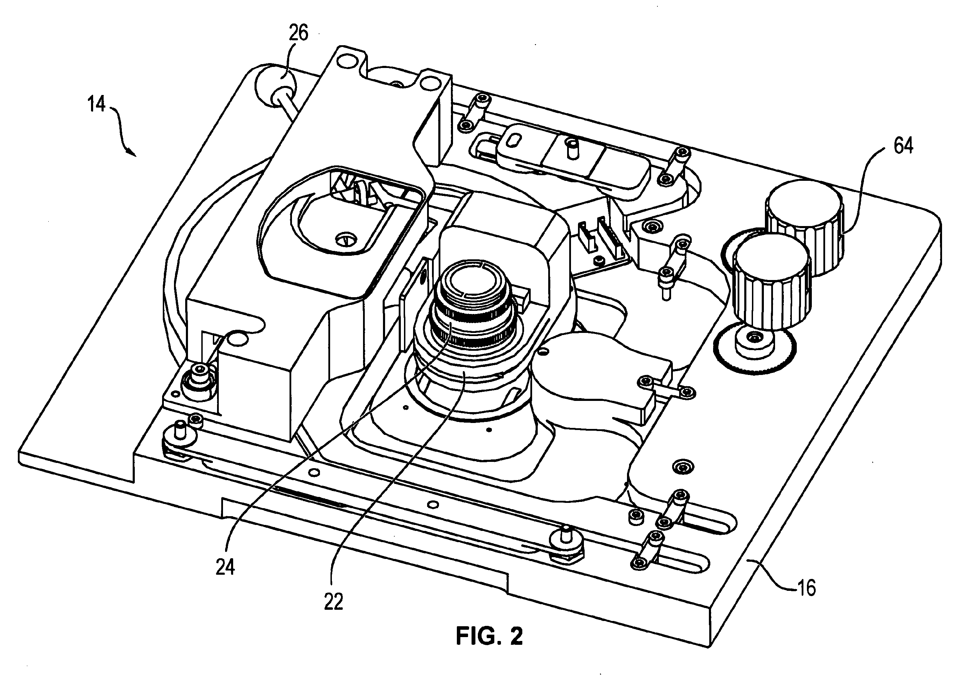

Im Folgenden wird zunächst der Gesamtaufbau eines hochauflösenden Lichtmikroskops 10 unter Bezugnahme auf die Figuren 1 und 2 erläutert. Dabei werden nur diejenigen Komponenten des Lichtmikroskops 10 beschrieben, die für das Verständnis der vorliegenden Erfindung benötigt werden.

Das Lichtmikroskop 10 weist ein Mikroskopstativ 12 auf, auf das ein Mikroskoptisch 14 geschraubt ist. Der Mikroskoptisch 14 hat eine Tischplatte 16, auf der ein Probenträger 18 aufliegt. Auf der Tischplatte 16 befindet sich ferner eine später im Detail beschriebene Positioniereinrichtung 20, die dazu dient, den Probenträger 18 auf der Tischplatte 16 zu positionieren.

Wie die Unteransicht nach Figur 2 zeigt, ist an der Unterseite der Tischplatte 16 ein verschwenkbarer Fokussierantrieb 22 angebracht, in den ein Objektiv 24 geschraubt ist. Über einen Schwenkhebel 26 lässt sich der Fokussierantrieb 22 mit dem an ihm gehaltenen Objektiv 24 aus einem Abbildungsstrahlengang des Lichtmikroskops 10 aus- und in diesen einschwenken. Der Abbildungsstrahlengang durchsetzt eine in der Tischplatte 16 ausgebildete Durchgangsöffnung 28, über der der Probenträger 18 angeordnet ist.

Das Lichtmikroskop 10 weist ferner ein an dem Mikroskopstativ 12 angebrachtes Paar Okulare 29 sowie einen Objektivrevolver 30 auf, der mehrere Mikroskopobjektive 32 hält. In der Darstellung nach Figur 1 ist das Mikroskopstativ 12 aufgebrochen dargestellt, so dass der durch den Mikroskoptisch 14 ansonsten verdeckte Objektivrevolver 30 sichtbar ist.

Das Lichtmikroskop 10 weist also neben den an dem Objektivrevolver 30 gehaltenen Mikroskopobjektiven 32 zusätzlich das an der Tischplatte 16 angebrachte Objektiv 24 auf. Der Objektivrevolver 30 kann dazu genutzt werden, zunächst übersichtshalber ein vergleichsweise großes Bildfeld zu betrachten, indem wahlweise eines der Mikroskopobjektive 32 in den Abbildungsstrahlengang eingeschwenkt wird. Hierzu wird das an der Tischplatte 16 gehaltene Objektiv 24 mit dem Schwenkhebel 26 aus dem Abbildungsstrahlengang herausgeschwenkt. Soll anschließend innerhalb des betrachteten Bildfeldes ein bestimmter Zielbereich mit besonders hoher Auflösung abgebildet werden, so wird das gerade im Abbildungsstrahlengang angeordnete Mikroskopobjektiv 32 aus dem Abbildungsstrahlengang entfernt und das an der Tischplatte 16 angebrachte Objektiv 24 in den Abbildungsstrahlengang eingeschwenkt. Da das Objektiv 24 unmittelbar an der Tischplatte 16 angeordnet ist, ist die mechanische Drift zwischen dem Probenträger 18, an dem die nicht gezeigte Probe gehalten ist, und dem Objektiv 24 vergleichsweise gering (jedenfalls geringer als bei Nutzung eines der an dem Objektivrevolver 30 gehaltenen Objektive 32), so dass in dieser Konfiguration eine hochauflösende Abbildung der Probe nach einem der eingangs beschriebenen lokalisierungsmikroskopischen Verfahren möglich ist.

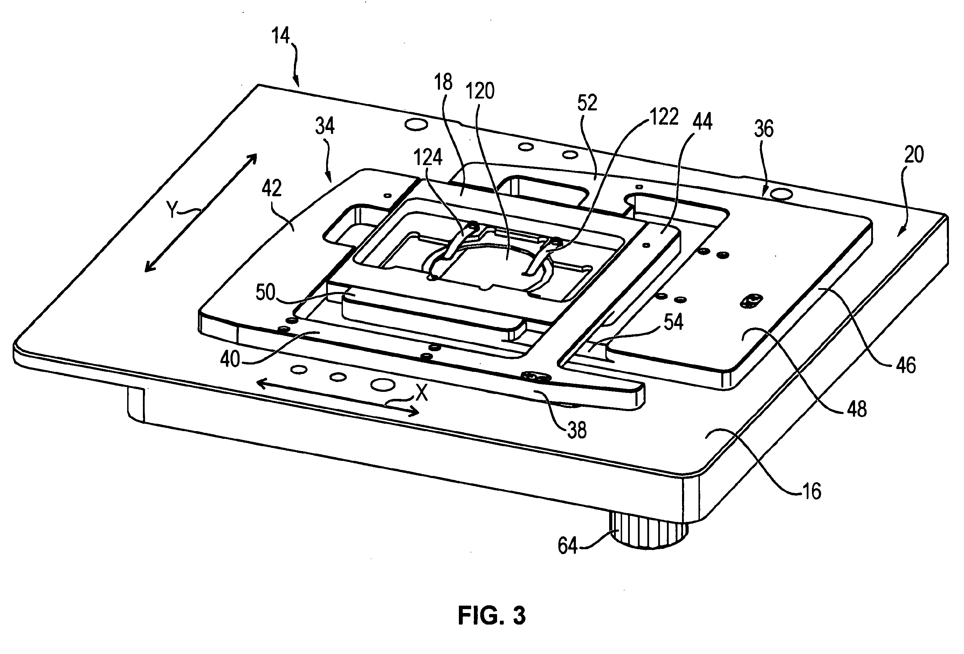

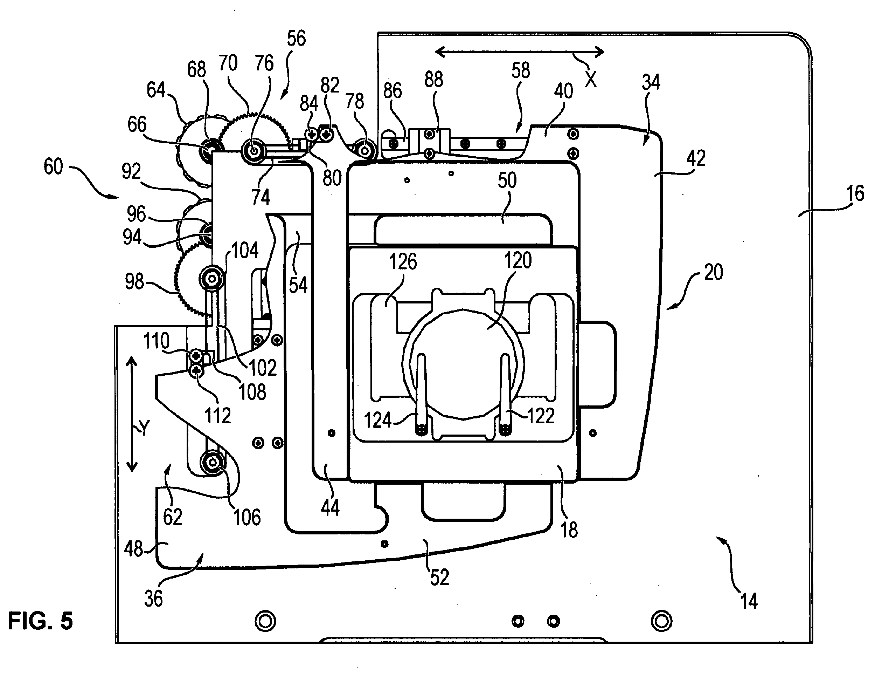

Im Folgenden wird die Positioniereinrichtung 20 unter Bezugnahme auf die Figuren 3 bis 6 im Einzelnen erläutert.

Die Positioniereinrichtung 20 umfasst zwei mechanisch voneinander entkoppelte Verstellvorrichtungen 34 und 36. Die Verstellvorrichtung 34 dient dazu, den Probenträger 18 in einer ersten Richtung auf der Tischplatte 16 zu verschieben, während die zweite Verstellvorrichtung verwendet wird, den Probenträger 18 in einer zu der ersten Richtung senkrechten zweiten Richtung auf der Tischplatte 16 zu verschieben. Die beiden vorstehend genannten Richtungen sind in den Figuren 3 bis 6 jeweils durch die Doppelpfeile X und Y angedeutet. Entsprechend wird die erste Verstellvorrichtung 34 im Folgenden als X-Verstellvorrichtung und die zweite Verstellvorrichtung 36 als Y-Verstellvorrichtung bezeichnet. Die durch die beiden Richtungen X und Y aufgespannte Verstellebene wird im Folgenden als X-Y-Ebene bezeichnet.

Wie aus Figur 3 hervorgeht, weist die X-Verstellvorrichtung 34 einen X-Schieber 38 auf, der in X-Richtung hin- und herbewegbar ist. Der X-Schieber 38 ist als eine im Wesentlichen U-förmige Platte ausgebildet, die einen Basisabschnitt 40 sowie zwei parallele Schenkelabschnitte 42 und 44 aufweist. Der Basisabschnitt 40 erstreckt sich in X-Richtung, während sich die beiden Schenkelabschnitte 42, 44 in Y-Richtung erstrecken. Entsprechend umfasst die Y-Verstellvorrichtung 36 einen Y-Schieber 46, der in Y-Richtung hin- und her bewegbar ist. Der Y-Schieber 46 hat ebenfalls einen Basisabschnitt 48 sowie zwei parallele Schenkelabschnitte 50 und 52. Der Basisabschnitt 48 erstreckt sich in Y-Richtung, während sich die beiden Schenkelabschnitte 50, 52 in X-Richtung erstrecken.

Der X-Schieber 38 und der Y-Schieber 46 sind so zueinander angeordnet, dass ihre Schenkelabschnitte 42, 44 bzw. 50, 52 gleichsam ineinander verschachtelt sind, ohne einander innerhalb ihres Verstellbereichs zu berühren. Hierzu weist der Schenkelabschnitt 50 des Y-Schiebers 46 eine längliche Aussparung 54 auf, die sich in X-Richtung erstreckt und in Y-Richtung von dem Schenkelabschnitt 44 des X-Schiebers 38 durchsetzt wird. Die Aussparung 54 gewährleistet also die ineinander verschachtelte, berührungslose Anordnung der beiden Schieber 38 und 46 zueinander.

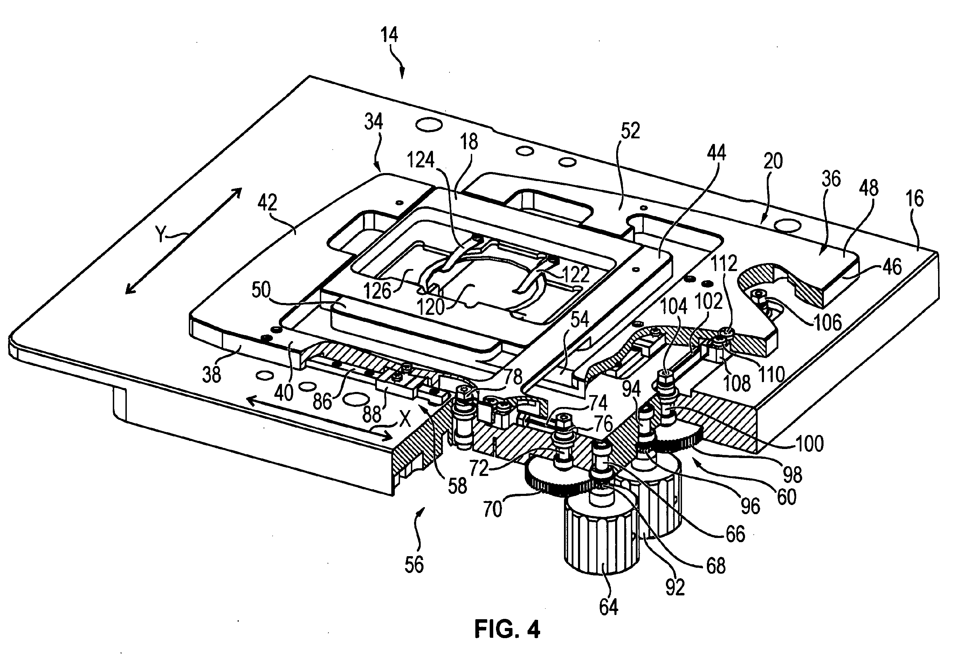

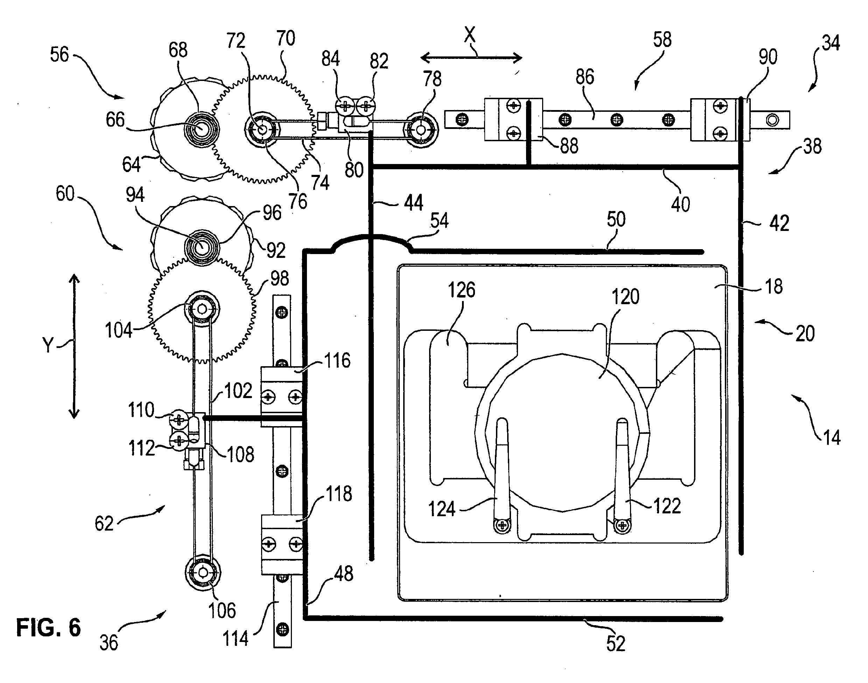

Die X-Verstellvorrichtung 34 umfasst ferner einen X-Antrieb 56 sowie eine X-Linearführung 58. Der X-Antrieb 56 und die X-Linearführung 58 dienen dazu, den X-Schieber 38 lineargeführt in X-Richtung zu bewegen. Entsprechend umfasst die Y-Verstellvorrichtung 36 einen Y-Antrieb 60 sowie eine Y-Linearführung 62, die dazu dienen, den Y-Schieber 46 linear geführt in Richtung der Achse Y zu bewegen. Die Antriebe 56, 60 und die Linearführungen 58, 62 werden im Folgenden unter Bezugnahme auf die Figuren 4 bis 6 im Einzelnen erläutert. Dabei zeigt Figur 6 die beiden Schieber 38 und 46 in ihrer Form abstrahiert, um die Funktionsweise der erfindungsgemäßen Anordnung zu verdeutlichen.

Der X-Antrieb 56 weist ein X-Handrad 64 auf, das über ein Lager 66 drehbar an der Tischplatte 16 angebracht ist. Mit dem X-Handrad 64 ist ein Zahnrad 68 gekoppelt, das sich zusammen mit dem Handrad 64 dreht. Das Zahnrad 68 steht in Eingriff mit einem Zahnrad 70, das über ein Lager 72 drehbar an der Tischplatte 16 befestigt ist. Die Zahnräder 68 und 70 sind so dimensioniert, dass sie gemeinsam ein Untersetzungsgetriebe bilden.

Die Drehbewegung des Zahnrads 70 wird an ein X-Antriebsseil 74 übertragen. Das X-Antriebsseil 74 ist um eine mit dem Zahnrad 70 gekoppelte Antriebsrolle 76 sowie eine in der Tischplatte 16 gelagerte Umlenkrolle 78 geführt. Die beiden Enden des X-Antriebsseils 74 sind in einem Seilspanner 80 mittels Befestigungsschrauben 82 und 84 befestigt. Mit dem Seilspanner 80 lässt sich die Seilspannung des X-Antriebsseils 74 nach Wunsch einstellen.

Der Seilspanner 80 ist fest an dem X-Schieber 38 angebracht. Der Seilspanner 80 bildet so einen Mitnehmer, der die umlaufende Bewegung des X-Antriebsseils 74, die durch die Betätigung des X-Handrads 84 bewirkt wird, in eine Bewegung des X-Schiebers 38 umsetzt.

Die X-Linearführung 58 weist eine sich in X-Richtung erstreckende X-Führungsschiene 86 auf, die fest in der Tischplatte 16 montiert ist. Die X-Führungsschiene 86 bildet die Achse, längs der der X-Schieber 38 geführt wird. Hierzu sind auf der X-Führungsschiene 86 zwei Linearlager 88 und 90 beweglich angeordnet. Die beiden Linearlager 88 und 90 sind fest mit dem X-Schieber 38 gekoppelt. Sie bewegen sich auf der X-Führungsschiene 86, wenn der X-Schieber 38 durch den X-Antrieb 56 in X-Richtung bewegt wird.

Der Y-Antrieb 60 und die Y-Linearführung 62 sind entsprechend dem X-Antrieb 56 bzw. der X-Linearführung 58 ausgebildet. Entsprechend umfasst der Y-Antrieb 60 ein Y-Handrad 92, ein Lager 94, Zahnräder 96 und 98, ein Lager 100, ein Y-Antriebsseil 102, eine Antriebsrolle 104, eine Umlenkrolle 106, einen Seilspanner 108 sowie Befestigungsschrauben 110, 112, während die Y-Linearführung 62 eine Y-Führungsschiene 114 sowie zwei Linearlager 116, 118 aufweist. Die Komponenten 92 bis 118 der Y-Verstellvorrichtung 36 arbeiten in der gleichen Weise wie die Komponenten 64 bis 90 der X-Verstellvorrichtung 34 (abgesehen davon, dass die Komponenten 92 bis 118 der Verstellung des Probenträgers in Y-Richtung dienen).

Wie am besten in den Figuren 3 bis 6 zu erkennen, ist der Probenträger 18 im Wesentlichen als rechteckige Platte ausgebildet, die in ihrer Mitte eine kreisrunde Öffnung 120 aufweist, die auf die Durchgangsöffnung 28 der Tischplatte 16 ausgerichtet ist. Der Probenträger 18 weist ferner Klammern 122 und 124 auf, die dazu dienen, die zu betrachtende, in den Figuren nicht gezeigte Probe in einer Aufnahmevertiefung 126 des Probenträgers 18 zu fixieren.

Wie schon oben erwähnt, dienen die X-Verstellvorrichtung 34 und die Y-Verstellvorrichtung 36 dazu, den Probenträger 18 auf der Tischplatte 16 unabhängig in X-Richtung und Y-Richtung zu bewegen. Die Funktionsweise der beiden Verstellvorrichtungen 34 und 36 wird im Folgenden unter Bezugnahme auf Figur 6 im Einzelnen beschrieben.

Wie in der Ansicht nach Figur 6 dargestellt ist, sind die beiden Schenkelabschnitte 42 und 44 des X-Schiebers 38 so angeordnet, dass sie zwei gegenüberliegende Seiten des Probenträgers 18 mit Spiel flankieren. Dies bedeutet, dass der in X-Richtung bemessene Abstand zwischen den beiden Schenkelabschnitten 42 und 44 größer ist als die Abmessung des Probenträgers 18 in X-Richtung. Damit ist gewährleistet, dass der Probenträger 18 zu keinem Zeitpunkt von beiden Armabschnitten 42 und 44 zugleich berührt wird und damit zwischen diesen eingeklemmt ist. In Figur 6 ist das Spiel, das die Schenkelabschnitte 42, 44 gegenüber dem Probenträger 18 aufweisen, zum besseren Verständnis übertrieben groß dargestellt. In der praktischen Umsetzung muss es nur so groß sein, dass ein Einklemmen des Probenträgers zwischen den beiden Schenkelabschnitten 42, 44 vermieden wird.

Soll der Probenträger 18 in X-Richtung bewegt werden, so wird das X-Handrad 64 gedreht, worauf dessen Drehbewegung über das durch die Zahnräder 68 und 70 gebildete Untersetzungsgetriebe in eine umlaufende Bewegung des X-Antriebsseils 74 umgesetzt wird. Diese umlaufende Bewegung des X-Antriebsseils 74 wird wiederum über den X-Seilspanner 80 auf den X-Schieber 38 übertragen. Dabei kommt einer der beiden Schenkelabschnitte 42 und 44 in Anlage mit der ihm zugewandten Seite des Probenträgers 18. Der Probenträger 18 wird dadurch auf der Tischplatte 16 in X-Richtung verschoben.

Entsprechend wird der Probenträger (unabhängig von der Bewegung in X-Richtung) über den Y-Antrieb 60 und die Y-Linearführung 62 in Y-Richtung bewegt.

Der Probenträger 18 liegt mit einer Haftkraft auf der Tischplatte 16 auf, die größer ist als die Summe aller Kräfte, die die Positioniereinrichtung 20 in ihrem deaktivierten Zustand in Folge einer mechanischen Drift auf den Probenträger 18 ausübt. Insbesondere ist die vorstehend genannte Haftkraft größer als diejenige Kraft, die einer der Schenkelabschnitte 42, 44, 50, 52 auf den Probenträger 18 ausübt, wenn er direkt an der ihm zugewandten Seite des Probenträgers 18 anliegt.

Dies wird sowohl dadurch erreicht, dass die Antriebe 56, 60 und die Linearführungen 58, 62 besonders leichtgängig sind, als auch dadurch, dass die Schieber 38 und 46 mit einer deutlich geringeren Haftkraft als der Probenträger 18 auf der Tischplatte 16 aufliegen. Letzteres wird beispielsweise dadurch bewirkt, dass der Probenträger 18 aus einem vergleichsweise schweren Material, z.B. Messing, besteht, während die Schieber 38 und 46 aus einem deutlich leichteren Material, z.B. Aluminium, gefertigt sind.

Durch diese Maßnahmen wird erreicht, dass die beweglichen Teile der Antriebe 56, 60 und der Linearführungen 58, 62 entgegen der Richtung bewegt werden, d.h. nachgeben, in der einer der Schenkelabschnitte 42, 44, 50, 52 bei Auftreten einer mechanischen Drift auf den Probenträger drückt 18. Der Schenkelabschnitt wird somit gleichsam an dem Probenträger 18 abgestoßen, während die Antriebe 56, 60 und die Linearführungen 58, 62 dieser Abstoßbewegung des Schenkelabschnitts keinen nennenswerten Widerstand entgegensetzen, sondern ihr nachgeben.

### Bezugszeichenliste

| | |
|---|---|
| 10 | Lichtmikroskop |
| 12 | Mikroskopstativ |
| 14 | Mikroskoptisch |
| 16 | Tischplatte |
| 18 | Probenträger |
| 20 | Positioniereinrichtung |
| 22 | Fokussierantrieb |
| 24 | Objektiv |
| 26 | Schwenkhebel |
| 28 | Durchgangsöffnung |
| 29 | Okulare |
| 30 | Objektivrevolver |
| 32 | Mikroskopobjektive |
| 34 | X-Verstellvorrichtung |
| 36 | Y-Verstellvorrichtung |
| 38 | X-Schieber |
| 40 | Basisabschnitt |
| 42, 44 | Schenkelabschnitte |
| 46 | Y-Schieber |
| 48 | Basisabschnitt |
| 50, 52 | Schenkelabschnitte |
| 54 | Aussparung |
| 56 | X-Antrieb |
| 58 | X-Linearführung |
| 60 | Y-Antrieb |
| 62 | Y-Linearführung |
| 64 | X-Handrad |
| 66 | Lager |
| 68, 70 | Zahnräder |
| 72 | Lager |
| 74 | X-Antriebsseil |
| 76 | Antriebsrolle |
| 78 | Umlenkrolle |
| 80 | Seilspanner |
| 82, 84 | Befestigungsschrauben |
| 86 | X-Führungsschiene |
| 88, 90 | Linearlager |
| 92 | Y-Handrad |
| 94 | Lager |
| 96, 98 | Zahnräder |
| 100 | Lager |
| 102 | Y-Antriebsseil |
| 104 | Antriebsrolle |
| 106 | Umlenkrolle |
| 108 | Seilspanner |
| 110, 112 | Befestigungsschrauben |
| 114 | Y-Führungsschiene |
| 116, 118 | Linearlager |
| 120 | Öffnung |
| 122, 124 | Klammern |
| 126 | Aufnahmevertiefung |

## Patentansprüche

1. Mikroskoptisch (14) mit
einer Tischplatte (16),
einem auf der Tischplatte (16) aufliegenden Probenträger (18) und einer Positioniereinrichtung (20) zum Bewegen des Probenträgers (18) in einer zur Tischplatte (16) parallelen Verstellebene,
wobei
die Positioniereinrichtung (20) zwei mechanisch voneinander entkoppelte Verstellvorrichtungen (34, 36) umfasst, von denen eine erste Verstellvorrichtung (34) ausgebildet ist, den Probenträger (18) längs einer ersten Achse in der Verstellebene zu bewegen, und eine zweite Verstellvorrichtung (36) ausgebildet ist, den Probenträger (18) längs einer zweiten Achse quer zur ersten Achse in der Verstellebene zu bewegen, und
die erste Verstellvorrichtung (34) einen ersten Schieber (38), der zwei quer zu der ersten Achse angeordnete erste Schenkelabschnitte (42, 44) aufweist und zum Verschieben des Probenträgers (18) mit diesem in Anlage bringbar ist, eine erste Linearführung (48), durch die der erste Schieber (38) längs der ersten Achse geführt ist, und einen ersten Antrieb (56) zum Bewegen des ersten Schiebers (38) längs der ersten Achse umfasst,
die zweite Verstellvorrichtung (36) einen zweiten Schieber (46), der zwei quer zu der zweiten Achse angeordnete zweite Schenkelabschnitte (50, 52) aufweist und zum Verschieben des Probenträgers (18) mit diesem in Anlage bringbar ist, eine zweite Linearführung (62), durch die der zweite Schieber (46) längs der zweiten Achse geführt ist, und einen zweiten Antrieb (60) zum Bewegen des zweiten Schiebers (46) längs der zweiten Achse umfasst,
**dadurch gekennzeichnet, dass**
einer der beiden zweiten Schenkelabschnitte (50, 52) des zweiten Schiebers (46) eine längliche Aussparung (54) aufweist, die sich parallel zur ersten Achse erstreckt, und einer der beiden ersten Schenkelabschnitte des ersten Schiebers (3 8) die Aussparung parallel zur zweiten Achse durchsetzt,
der Probenträger (18) mit einer Haftkraft auf der Tischplatte (16) aufliegt, die größer ist als eine Kraft, mit der die Positioniereinrichtung (20) in ihrem deaktivierten Betriebszustand auf den Probenträger (18) einwirkt,der erste Schieber (38) im Wesentlichen U-förmig ausgebildet ist und einen längs zur ersten Achse angeordneten ersten Basisabschnitt (40) sowie die beiden quer zur ersten Achse angeordneten ersten Schenkelabschnitte (42, 44) aufweist,
der zweite Schieber (46) im Wesentlichen U-förmig ausgebildet ist und einen längs zur zweiten Achse angeordneten zweiten Basisabschnitt (48) sowie die beiden quer zur zweiten Achse angeordneten zweiten Schenkelabschnitte (50, 52) aufweist, und
der Probenträger (18) im Wesentlichen als rechteckige Platte ausgebildet ist, die zwei erste einander gegenüberliegende Seiten, die mit Spiel von den ersten Schenkelabschnitten (42, 44) des ersten Schiebers (38) flankiert sind, und zwei zweite einander gegenüberliegende Seiten hat, die mit Spiel von den zweiten Schenkelabschnitten (50, 52) des zweiten Schiebers (46) flankiert sind.

2. Mikroskoptisch (14) nach Anspruch 1, **dadurch gekennzeichnet, dass** die beiden Schieber (3 8, 46) kreuzweise und berührungslos zueinander angeordnet sind.

3. Mikroskoptisch (14) nach einem der vorhergehenden Ansprüche, **dadurch gekennzeichnet, dass** die beiden Antriebe (56, 60) jeweils ein um Rollen (76, 78, 104, 106) umlaufend angetriebenes Seil (74, 102) und ein an dem Seil (74, 102) angebrachtes Kopplungselement (80, 108) umfassen, durch welches das jeweilige Seil (74, 102) fest mit dem zugehörigen Schieber (38, 46) gekoppelt ist.

4. Mikroskoptisch (14) nach Anspruch 3, **dadurch gekennzeichnet, dass** das Kopplungselement ein Seilspanner (80, 108) ist, in dem die beiden Enden des Seil (74, 102) eingespannt sind.

5. Mikroskoptisch (14) nach Anspruch 3 oder 4, **dadurch gekennzeichnet, dass** die beiden Antriebe (56, 60) jeweils ein handbetätigbares Antriebsrad (64, 92) und ein mit dem Antriebsrad (64, 92) und dem Seil (74, 102) gekoppeltes Untersetzungsgetriebe (68, 70, 96, 98) umfassen, das eine Drehbewegung des jeweiligen Antriebsrads (56, 60) in die umlaufende Antriebsbewegung des zugehörigen Seils (74, 102) umsetzt.

6. Mikroskoptisch (14) nach einem der vorhergehenden Ansprüche, **dadurch gekennzeichnet, dass** die beiden Linearführungen (58, 62) jeweils eine längs der zugehörigen Achse angeordnete Führungsschiene (86, 114) und mindestens ein mit dem zugehörigen Schieber (38, 46) gekoppeltes Linearlager (88, 90, 116, 118) umfassen, das auf der jeweiligen Führungsschiene (86, 114) verschiebbar ist.

7. Mikroskoptisch (14) nach einem der vorhergehenden Ansprüche, **dadurch gekennzeichnet, dass** der Probenträger (18) aus einem Material mit einer höheren spezfischen Dicht besteht als die beiden Schieber (38, 46), wie z.B. Messing und Aluminium.

8. Mikroskoptisch (14) nach einem der vorhergehenden Ansprüche, **dadurch gekennzeichnet, dass** an der Tischplatte (16) ein Objektiv (24) angebracht ist.

9. Mikroskoptisch (14) nach Anspruch8, **dadurch gekennzeichnet, dass** das Objektiv (24) über einen Fokussierantrieb (22) an der Unterseite der Tischplatte (16) angebracht ist.

10. Mikroskoptisch (14) nach einem der vorhergehenden Ansprüche, **dadurch gekennzeichnet, dass** die Tischplatte (16) eine auf einen Abbildungsstrahlengang des Mikroskops ausgerichtete Durchgangsöffnung (28) aufweist.

11. Mikroskop (10) mit einem Mikroskoptisch (14) nach einem der vorhergehenden Ansprüche.

12. Mikroskop (10) nach Anspruch 11, **gekennzeichnet durch** einen Objektivrevolver (30) zum wahlweisen Einschwenken eines von mehreren an dem Objektivrevolver (30) gehaltenen Mikroskopobjektiven (32).

## Claims

1. A microscope stage (14), comprising
a platform (16),
a specimen holder (18) resting on the platform (16) and
a positioning device (20) for moving the specimen holder (18) in a plane of displacement that is parallel to the platform (16),
wherein
the positioning device (20) comprises two displacing devices (34, 36) which are mechanically decoupled from each other, of which a first displacing device (34) is configured to move the specimen holder (18) along a first axis in the plane of displacement, and a second displacing device (36) is configured to move the specimen holder (18) along a second axis transversely to the first axis in the plane of displacement, and
the first displacing device (34) includes a first slider (38) having two first leg portions (42, 44) which are arranged transversely to the first axis and can be brought into contact with the specimen holder (18) for displacing the specimen holder (18), a first linear guide (48) by means of which the first slider (38) is guided along the first axis, and a first drive (56) for moving the first slider (38) along the first axis,
the second displacing device (36) comprises a second slider (46) including two second leg portions (50, 52) which are arranged transversely to the second axis and can be brought into contact with the specimen holder (18) for displacing the specimen holder (18), a second linear guide (62), by means of which the second slider (46) is guided along the second axis, and a second drive (60) for moving the second slider (46) along the second axis,
**characterized in that**
one of the two second leg portions (50, 52) of the second slider (46) includes an elongated recess (54) extending parallel to the first axis, and one of the two first leg portions of the first slider (38) passes through the recess parallel to the second axis,
the specimen holder (18) rests on the platform (16) with an adhesive force that is greater than a force with which the positioning device (20) in its deactivated operating state acts on the specimen holder (18), the first slider (38) is formed substantially U-shaped and includes a first base portion (40) being arranged along the first axis as well as the two first leg portions (42, 44) being arranged transversely to the first axis,
the second slider (46) is formed substantially U-shaped and includes a second base portion (48) being arranged along the second axis as well as the two second leg portions (50, 52) being arranged transversely to the second axis, and
the specimen holder (18) is substantially formed as a rectangular plate having two first opposite sides which are flanked with clearance by the first leg portions (42, 44) of the first slider (38) and two second opposite sides which are flanked with clearance by the second leg portions (50, 52) of the second slider (46).

2. The microscope stage (14) according to claim 1, **characterized in that** the two sliders (38, 46) are arranged in a crosswise and contact-free manner with respect to one another.

3. The microscope stage (14) according to one of the preceding claims, **characterized in that** the two drives (56, 60) respectively comprise a rope (74, 102) driven around rollers (76, 78, 104, 106) and a coupling element (80, 108) fitted to the rope (74, 102) by means of which the respective rope (74, 102) is tightly coupled to the corresponding slider (38, 46).

4. The microscope stage (14) according to claim 3, **characterized in that** the coupling element is a rope tensioner (80, 108) in which both ends of the rope (74, 102) are clamped.

5. The microscope stage (14) according to claim 3 or 4, **characterized in that** the two drives (56, 60) comprise respectively one manually operable drive wheel (64, 92) and a reduction gear set (68, 70, 96, 98) coupled to the drive wheel (64, 92) and the rope (74, 102) which converts a rotary motion of the respective drive wheel (56, 60) into the circulating drive motion of the corresponding rope (74, 102).

6. The microscope stage (14) according to one of the preceding claims, **characterized in that** the two linear guides (58, 62) comprise respectively one guide rail (86, 114) arranged along the corresponding axis and at least one linear bearing (88, 90, 116, 118) coupled to the corresponding slider (38, 46) being displaceable on the respective guide rail (86, 114).

7. The microscope stage (14) according to one of the preceding claims, **characterized in that** the specimen holder (18) is made of a material having a higher specific density than the two sliders (38, 46), such as brass or aluminum.

8. The microscope stage (14) according to one of the preceding claims, **characterized in that** an objective (24) is mounted to the platform (16).

9. The microscope stage (14) according to claim 8, **characterized in that** the objective (24) is mounted to the underside of the platform (16) via a focusing drive (22).

10. The microscope stage (14) according to one of the preceding claims, **characterized in that** the platform (16) includes a through hole (28) that is aligned with an imaging beam path of the microscope.

11. The microscope stage (10) having a microscope stage (14) according to one of the preceding claims.

12. The microscope stage (10) according to claim 11, **characterized by** an objective revolver (30) for selective rotation of one of several microscope objectives (32) held on the objective revolver (30).

## Revendications

1. Table de microscope (14) comprenant
une tablette (16),
un porte-échantillon (18) reposant sur la tablette (16) et
un dispositif de positionnement (20) permettant de déplacer le porte-échantillon (18) dans un plan de réglage parallèle à la tablette (16),
le dispositif de positionnement (20) comprenant deux dispositifs de réglage (34, 36) découplés mécaniquement l'un de l'autre, parmi lesquels un premier dispositif de réglage (34) est conçu pour déplacer le porte-échantillon (18) le long d'un premier axe dans le plan de réglage, et un second dispositif de réglage (36) est conçu pour déplacer le porte-échantillon (18) le long d'un second axe transversalement au premier axe dans le plan de réglage, et
le premier dispositif de réglage (34) comporte un premier coulisseau (38) comprenant deux premières parties branche (42, 44) disposées transversalement au premier axe et pouvant être amené en appui avec le porte-échantillon (18) pour déplacer celui-ci, un premier guide linéaire (48) permettant de guider le premier coulisseau (38) le long du premier axe, et un premier entraînement (56) permettant de déplacer le premier coulisseau (38) le long du premier axe,
le second dispositif de réglage (36) comporte un second coulisseau (46) comprenant deux secondes parties branche (50, 52) disposées transversalement au second axe et pouvant être amené en appui avec le porte-échantillon (18) pour déplacer celui-ci, un second guide linéaire (62) permettant de guider le second coulisseau (46) le long du second axe, et un second entraînement (60) permettant de déplacer le second coulisseau (46) le long du second axe,
**caractérisé en ce que**
une des deux secondes parties branche (50, 52) du second coulisseau (46) comprend un évidement de forme allongée (54) s'étendant parallèlement au premier axe, et une des deux premières parties branche du premier coulisseau (38) traverse l'évidement parallèlement au second axe,
le porte-échantillon (18) repose sur la tablette (16) au moyen d'une force de retenue supérieure à une force permettant au dispositif de positionnement (20), lorsqu'il se trouve dans son état de fonctionnement désactivé, d'agir sur le porte-échantillon (18), le premier coulisseau (38) est conçu sensiblement en forme de U et comprend une première partie de base (40) disposée le long du premier axe et les deux premières parties branche (42, 44) disposées transversalement au premier axe,
le second coulisseau (46) est conçu sensiblement en forme de U et comprend une seconde partie de base (48) disposée le long du second axe et les deux secondes parties branche (50, 52) disposées transversalement au second axe, et
le porte-échantillon (18) est conçu sensiblement comme une plaque rectangulaire présentant deux premiers côtés opposés l'un à l'autre et flanqués, avec un jeu, des premières parties branche (42, 44) du premier coulisseau (38), et deux seconds côtés opposés l'un à l'autre et flanqués, avec un jeu, des deux secondes parties branche (50, 52) du second coulisseau (46).

2. Table de microscope (14) selon la revendication 1, **caractérisée en ce que** les deux coulisseaux (38, 46) sont disposés en croix et ne se touchent pas.

3. Table de microscope (14) selon l'une quelconque des revendications précédentes, **caractérisée en ce que** les deux entraînements (56, 60) comportent respectivement un câble (74, 102) entraîné en rotation autour de rouleaux (76, 78, 104, 106) et un élément d'accouplement (80, 108) agencé sur le câble (74, 102) et permettant d'accoupler solidement le câble (74, 102) respectif au coulisseau (38, 46) associé.

4. Table de microscope (14) selon la revendication 3, **caractérisée en ce que** l'élément d'accouplement est un tendeur de câble (80, 108) dans lequel les deux extrémités du câble (74, 102) sont tendues.

5. Table de microscope (14) selon la revendication 3 ou 4, **caractérisée en ce que** les deux entraînements (56, 60) comportent respectivement une roue motrice (64, 92) à commande manuelle et une transmission démultiplicatrice (68, 70, 96, 98) accouplée à la roue motrice (64, 92) et au câble (74, 102), ladite transmission convertissant un mouvement rotatif de la roue motrice (56, 60) respective en mouvement d'entraînement circulaire du câble (74, 102) associé.

6. Table de microscope (14) selon l'une quelconque des revendications précédentes, **caractérisée en ce que** les deux guides linéaires (58, 62) comportent respectivement un rail de guidage (86, 114) disposé le long de l'axe associé et au moins un palier linéaire (88, 90, 116, 118) accouplé au coulisseau (38, 46) associé, ledit palier étant mobile sur le rail de guidage (86, 114) respectif.

7. Table de microscope (14) selon l'une quelconque des revendications précédentes, **caractérisée en ce que** le porte-échantillon (18) est constitué d'un matériau présentant une densité spécifique supérieure à celle des deux coulisseaux (38, 46), comme par exemple le laiton et l'aluminium.

8. Table de microscope (14) selon l'une quelconque des revendications précédentes, **caractérisée en ce qu'**un objectif (24) est agencé sur la tablette (16).

9. Table de microscope (14) selon la revendication 8, **caractérisée en ce que** l'objectif (24) est agencé sur le dessous de la tablette (16) par l'intermédiaire d'un entraînement de focalisation (22).

10. Table de microscope (14) selon l'une quelconque des revendications précédentes, **caractérisée en ce que** la tablette (16) comprend une ouverture de passage (28) orientée en direction d'un faisceau de reproduction du microscope.

11. Microscope (10) comprenant une table de microscope (14) selon l'une quelconque des revendications précédentes.

12. Microscope (10) selon la revendication 11, **caractérisé par** une tourelle revolver d'objectif (30) permettant le pivotement rentrant éventuel d'un objectif parmi plusieurs objectifs de microscope (32) retenus sur la tourelle revolver d'objectif (30).
